# FASCICULE DE BREVET EUROPEEN

(11) **EP 0 561 702 B1**
(45) Date de publication et mention de la délivrance du brevet: **10.04.1996**
(21) Numéro de dépôt: 93400685.9
(22) Date de dépôt: 17.03.1993
(51) Int. Cl.: A21D 13/08

(54) **Pâtons de croissants et autres produits de boulangerie, surgelés, prêts à cuire, procédé pour leur fabrication, et produits cuits obtenus**
Tiefgefrorene Croissant-Fertigteigstücke und andere Bäckereiprodukte und Verfahren zu ihrer Herstellung
Frozen ready-to-bake croissant doughs and other bakery products and process for their manufacture

(30) Priorité: 20.03.1992 FR 9203365
(43) Date de publication de la demande: 22.09.1993
(73) Titulaire: N.V. CERES S.A., B-1130 Bruxelles (BE)
(72) Inventeur: Vael, Marc Cyrille Alice, B-9240 Zele (BE)
(74) Mandataire: Colas, Jean-Pierre

(56) Documents cités:
- WO-A-91/01088
- WO-A-92/11767
- GB-A- 1 005 802
- GB-A- 2 102 269
- US-A- 3 250 625
- US-A- 3 250 626
- US-A- 3 255 016
- US-A- 3 368 903
- PATENT ABSTRACTS OF JAPAN vol. 14, no. 37 (C-0680)24 Janvier 1990

## Description

L'invention concerne des pâtons de croissants et produits de boulangerie similaires, surgelés, prêts à cuire, un procédé pour leur fabrication, et les produits cuits obtenus.

La fabrication traditionnelle des croissants consiste à former une pâte levurée constituée de farine, d'eau, de levure, de sucre, de sel, de beurre ou margarine, et éventuellement de divers agents améliorants connus tels qu'un émulsifiant, l'acide ascorbique, une amylase, une hémicellulase, etc..., à tourer cette pâte afin d'obtenir une structure feuilletée, à détailler cette dernière en pièces qui sont roulées en un pâton, à mettre les pâtons à fermenter pour qu'ils se développent en volume, et, enfin, à les cuire [voir le document Patent Abstracts of Japan, vol.14, no.37 (C-0680) 24 Janvier 1980].

La fabrication de croissants surgelés procède de façon analogue à celle des croissants classiques si ce n'est qu'on pratique une opération de surgélation intermédiaire. On distingue, en fait, deux façons de procéder principales :
- congeler les pâtons non fermentés pour obtenir des pâtons crus surgelés, ou
- congeler les pâtons fermentés pour obtenir des pâtons crus, fermentés et surgelés.

Dans le premier cas, au moment de l'emploi, le pâton doit être d'abord décongelé, puis mis en fermentation, par exemple pendant 1 à 2 heures à 30°C, et enfin cuit.

Dans le deuxième cas, le pâton peut être décongelé, puis cuit, ou encore cuit directement.

Ces deux façons de faire ont leur avantages et leurs inconvénients.

La technique du pâton cru surgelé permet de stocker et de manipuler des produits de faible volume et d'une masse spécifique de l'ordre de 1. Elle souffre, cependant, de deux inconvénients, à savoir la perte d'activité de la levure au cours d'un stockage prolongé, et la nécessité d'effectuer des opérations de décongélation et de fermentation avant la cuisson.

La technique du pâton cru fermenté, surgelé, élimine ces deux inconvénients, cependant ce type de produit a une masse spécifique de l'ordre de 0,2-0,3 et occupe donc un volume 3 à 5 fois supérieur au pâton cru surgelé pour une même masse de matière.

Il serait donc désirable de disposer d'un produit cru surgelé qui se développerait en volume au cours de la cuisson sans nécessiter une étape de fermentation préalable, et qui cumulerait donc les avantages des deux types de produits de la technique antérieure sans en présenter les inconvénients.

L'invention vise à fournir un tel produit.

L'invention repose sur la mise en oeuvre, pour l'obtention de la structure feuilletée, d'un tourage tel qu'on obtienne un nombre de couches de matières grasses supérieur à 50, qui est nettement supérieur au nombre de couches normalement pratiquées lors de l'élaboration des croissants frais ou surgelés classiques.

Plus précisément, l'invention concerne des pâtons crus pouvant être directement cuits en croissants et autres produits de boulangerie similaires, sans décongélation ni fermentation intermédiaire, comprenant une pluralité de couches de matière grasse et une pluralité de couches de pâte levurée, caractérisés en ce qu'ils comportent un nombre total de couches de matière grasse supérieur à 50.

D'une façon préférée mais optionnelle, les pâtons de l'invention contiennent, en outre, au moins un des trois additifs suivants :
- un agent acidifiant à action progressive,
- un agent épaississant et/ou gélifiant rétenteur d'eau, et
- un enzyme lipolytique.

D'une façon optionnelle mais particulièrement préférée, les pâtons de l'invention contiennent à la fois ces trois additifs.

Selon une variante les pâtons comprennent, en outre, une pluralité de couches de pâte dépourvue de levure.

L'invention concerne aussi les produits de boulangerie obtenus par cuisson directe des pâtons crus surgelés de l'invention.

L'invention concerne, en outre, un procédé de fabrication de pâtons crus surgelés pouvant être directement cuits en croissants ou autres produits de boulangerie similaires, sans décongélation ni fermentation intermédiaire, caractérisé en ce qu'il comprend les étapes suivantes :
a) préparer une pâte levurée en y incorporant facultativement les additifs sus-mentionnés ;
b) abaisser la pâte obtenue sous forme de feuille et lui appliquer une couche de matière grasse ;
c) tourer le tout de façon que le nombre total de couches de la matière grasse soit supérieur à 50 ;
d) rouler la pâte tourée jusqu'à l'épaisseur désirée, et former des pâtons à partir de ladite pâte ; et
e) surgeler les pâtons.

L'invention concerne aussi un procédé de fabrication de pâtons crus surgelés correspondant à la variante des pâtons sus-définis, caractérisé en ce qu'il comprend les étapes suivantes :
i) préparer une pâte exempte de levure ;
ii) préparer une pâte levurée ;
iii) abaisser les pâtes obtenues sous forme de feuilles ;
iv) préparer une structure stratifiée comprenant au moins une séquence constituée dans l'ordre, d'une couche de pâte levurée, d'une couche de pâte non levurée et d'une couche de matière grasse, et tourer cette structure de façon que le nombre total de couches de matière grasse soit supérieur à 50 ;
v) rouler la pâte tourée résultante jusqu'à l'épaisseur désirée, et former des pâtons à partir de ladite pâte ; et
vi) surgeler les pâtons.

Il est à noter que ladite structure stratifiée peut être formée uniquement de la structure à 3 couches définies ou comporter des couches supplémentaires, par exemple comme l'illustre l'exemple 3 ci-dessous.

D'une façon optionnelle, mais préférée, on incorpore à la pâte utilisée ou à au moins l'une des pâtes utilisées, et de préférence aux deux pâtes lorsqu'on utilise deux pâtes différentes, au moins l'un des trois additifs suivants :
- un agent acidifiant à action progressive
- un agent épaississant et/ou gélifiant rétenteur d'eau, et
- un enzyme lipolytique.

D'une façon particulièrement préférée, on incorpore à la pâte où à chacune des deux pâtes les trois additifs ci-dessus.

De façon préférée également, l'étape iv) est conduite de manière que la pâte levurée forme l'extérieur de la pâte mixte tourée résultante.

Par l'expression "produits de boulangerie similaires" on entend des produits fabriqués ordinairement à partir de pâte à croissants, tels que les petits pains au chocolat ou aux raisins, et autres produits de viennoiserie.

La particularité cruciale de l'invention réside dans le tourage appliqué à la pâte ou aux pâtes associées.

Habituellement dans la fabrication des croissants classiques le tourage est tel que le nombre de couches de matière grasse n'excède pas 40 dans le pâton et est même le plus souvent inférieur à cette valeur. Selon l'invention, on a trouvé que le tourage devait être plus poussé et tel que le nombre de couches de matière grasse dans le pâton soit supérieur à 50, de préférence entre 80 et 500, et au mieux entre 80 et 240. Avec un nombre de couches de matière grasse inférieur à 50, on n'obtient pas un produit final cuit satisfaisant, et un nombre de couches supérieur à 500 est superflu, voire nuisible.

Les croissants obtenus en mettant en oeuvre cette particularité dans la fabrication des pâtons surgelés, présentent des propriétés satisfaisantes qui les rendent déjà supérieurs aux croissants obtenus à partir de produits surgelés actuellement disponibles dans le commerce.

Un premier moyen optionnel permettant d'améliorer les produits de boulangerie finalement obtenus consiste à associer une pâte non levurée à la pâte levurée. Une telle association est inhabituelle dans le domaine considéré car la fabrication de croissants ne fait ordinairement appel qu'à l'emploi d'une unique pâte levurée.

On peut aussi améliorer ces produits de boulangerie en incorporant au moins l'un des trois additifs sus-visés, et de préférence les trois additifs, à la pâte de départ, lorsqu'on n'utilise que de la pâte levurée, ou à au moins l'une des pâtes de départ, et de préférence aux deux pâtes de départ, lorsqu'on utilise deux pâtes, l'une levurée et l'autre pas.

Comme agent acidifiant à action progressive, on peut utiliser notamment la glucono-delta-lactone, disponible auprès de la Société Roquette, Lille, France. La proportion de cet agent acidifiant à utiliser peut aller, à titre indicatif, de 2 à 10 parties en poids pour 1000 parties en poids de farine.

Un agent acidifiant à action progressive est un agent qui, lorsqu'il est mis dans un milieu aqueux, s'hydrolyse progressivement en libérant un acide.

La glucono-delta-lactone, par exemple, s'hydrolyse, en milieu aqueux, en l'espace de quelques minutes avec libération d'acide gluconique. L'hydrolyse est d'autant plus rapide que la température est élevée.

L'agent acidifiant à action progressive exerce un effet retard sur la coagulation de l'amidon et permet de ce fait d'obtenir un produit final cuit (croissant, par exemple) de texture améliorée, qui ne pourrait pas être obtenu avec un agent acidifiant normal ou en l'absence de tout agent acidifiant.

Comme agent épaississant et/ou gélifiant, rétenteur d'eau, on peut utiliser, par exemple, de la carboxyméthylcellulose et ses dérivés tels que la forme sodique ; ou un polysaccharide tel que la gomme guar, le xanthane ou un alginate (par exemple l'alginate de sodium).

La proportion de cet agent à utiliser peut aller, à titre indicatif, de 2 à 10 parties en poids pour 1000 parties en poids de farine.

Le rôle de cet agent épaississant et,ou gélifiant, rétenteur d'eau, est d'aider à retenir les vapeurs et/ou gaz dégagés lors de la fermentation de la levure et lors de la cuisson pour obtenir ainsi un développement amélioré. Egalement, il sert à fournir de l'eau pour hydrolyser l'agent acidifiant à action progressive éventuellement présent.

Comme enzyme lipolytique, on peut utiliser notamment une lipase ou une estérase d'acides gras. A titre indicatif, on peut incorporer une quantité d'enzyme correspondant à 12 à 120 unités LCA par kilogramme de farine. L'unité LCA est une unité enzymatique définie par la Société ROHM dans un document référencé 50-1-16-E disponible auprès de cette Société. L'unité LCA est basée sur une mesure de l'activité de lipase sur un substrat tributyrate de glycérine. Il n'existe pas de norme officielle définissant l'activité lipolytique.

L'enzyme lipolytique sert, de son côté, à attaquer les molécules de matières grasses avec formation de produits de dégradation doués de propriétés émulsifiantes et/ou aromatiques.

Lorsqu'on a recours à l'emploi simultané des trois additifs précités, ils sont avantageusement, mais non obligatoirement, prémélangés entre eux avant addition à la ou aux pâtes.

Outre les trois additifs précités, il est possible d'ajouter à la ou aux pâtes employées pour la fabrication des produits de l'invention d'autres additifs améliorants alimentaires usuels, tels que, par exemple, un émulsifiant ou autre.

La matière grasse peut être une margarine ou du beurre.

Les exemples non limitatifs suivant feront bien comprendre l'invention. Dans ces exemples, toutes les parties sont indiquées en poids, sauf mention contraire.

### Exemple 1 - Fabrication de pâtons de croissant crus surgelés à partir de pâte levurée seule

### A) Recette de pâte levurée feuilletée

1000 g de farine panifiable de marque DUO vendue par la Société CERES, Bruxelles, Belgique
80-120 g de sucre
75 g de levure boulangère pressée (à environ 30-35% de matières sèches)
550 g d'eau (ou 500 g d'eau + 1 oeuf)
20 g de sel

### B) Préparation de la pâte

- bien mélanger la farine et le sucre
- ajouter l'eau, l'oeuf éventuel, et la levure, puis mélanger,
- ajouter le sel, puis pétrir.

Il y a lieu de veiller à ce que la température de cette pâte n'excède pas 20°C.

### C) Préparation des pâtons

On prend 1000 g de la pâte, on l'abaisse à la forme d'une feuille, et on y étale 300-500 g de margarine et/ou beurre, et on toure 1 x 2, puis 3 x 3 (c'est-à-dire un pliage en 2 plis, puis 3 pliages successifs en 3 plis) de façon à obtenir 54 couches de matière grasse.

On roule la pâte tourée jusqu'à une épaisseur de 3,5 mm environ.

On découpe la pâte en morceau en forme de triangle pesant environ 50 g chaque, qu'on enroule sur eux-mêmes pour obtenir des pâtons.

On surgèle les pâtons à -35°C.

### D) Utilisation des pâtons surgelés :

Lorsqu'on veut préparer des croissants à partir des pâtons, il suffit de cuire les pâtons dans un four, directement au sortir du congélateur. Par exemple, on peut préchauffer le four à 215°C, enfourner les pâtons surgelés, facultativement injecter de la vapeur d'eau dans le four pour améliorer le brillant des croissants, puis laisser cuire pendant 22 minutes environ. On obtient ainsi des croissants prêts à être consommés. On n'observe pas d'écoulement de matière grasse pendant la cuisson. Le développement: en volume au cours de la cuisson, c'est-à-dire le rapport du volume du croissant cuit au volume du croissant cru surgelé est de l'ordre de 3 à 3,5.

### Exemple 2 (comparatif)

On répète le mode opératoire de l'exemple 1, si ce n'est qu'on ne procède qu'à un tourage 3 x 3 de façon à obtenir 27 couches de matière grasse.

A la cuisson la matière grasse coule des pâtons et les croissants ne se développent pas bien.

### Exemple 3 - Fabrication de pâtons de croissants crus surgelés à partir de deux pâtes

### A) Recettes de base :

1) Pâte non levurée : 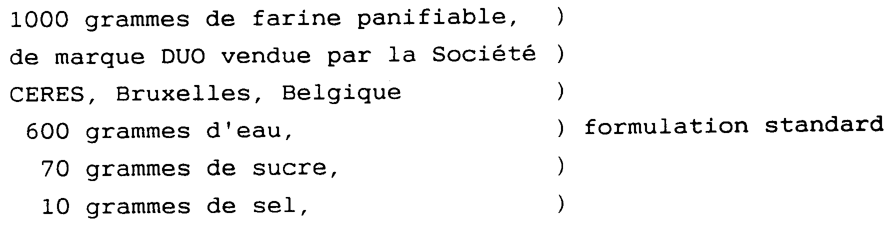 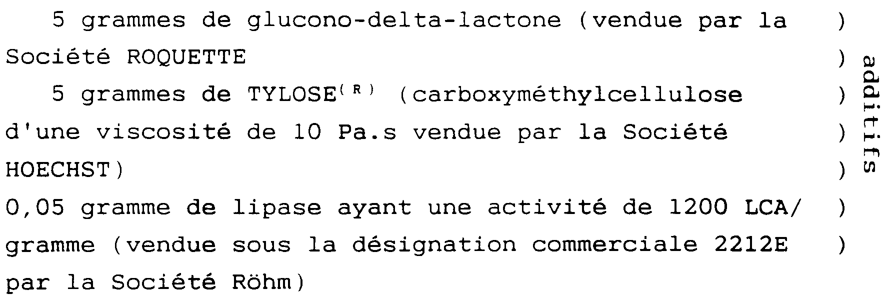
2) Pâte levurée :

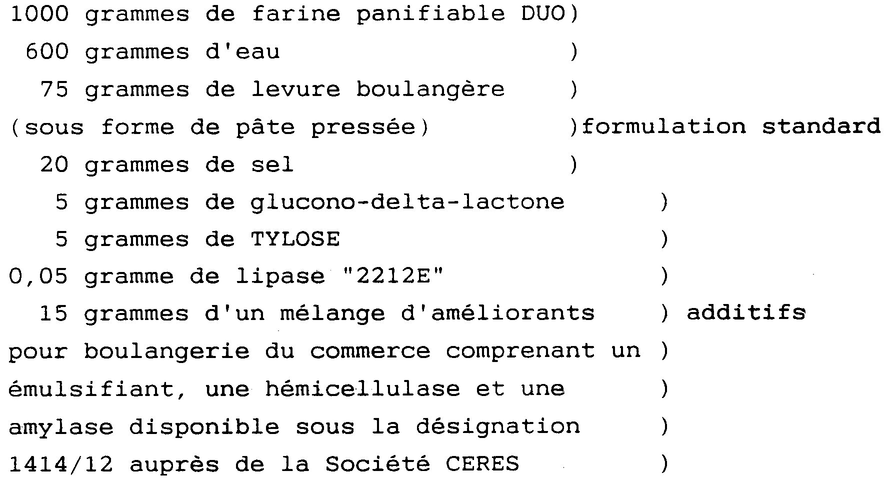

### B) Préparation

1) Pâte non levurée
   - bien mélanger tous les ingrédients sauf l'eau,
   - ajouter l'eau,
   - pétrir pendant 5 minutes,
   - laisser reposer 30 mn au réfrigérateur à 4°C.
2) Pâte levurée
   - bien mélanger tous les ingrédients, sauf l'eau, la levure et le sel,
   - ajouter l'eau et la levure, puis mélanger,
   - ajouter le sel, puis pétrir.

   Il y a lieu de veiller à ce que la température de cette pâte n'excède pas 20°C.
3) Préparation des pâtons
   a) 1ère méthode
      On prend 1000 grammes de pâte non levurée en forme de feuille et on y étale 800 grammes de margarine. On toure 1 x 3 (c'est-à-dire un pliage en 3 plis), puis on roule à 7 mm d'épaisseur environ la pâte feuilletée tourée résultante.
      On roule à son tour 1000 grammes de pâte levurée jusqu'à une épaisseur de 5 mm environ.
      On met la pâte feuilletée sur la pâte levurée.
      On toure le tout 2 x 3 (2 pliages successifs en 3 plis chacun).
      On toure encore 1 x 3, puis 1 x 2.
      On roule la pâte jusqu'à une épaisseur de 3,5 mm environ.
      On découpe la pâte en morceaux en forme de triangle pesant environ 50 g chaque, qu'on enroule sur eux-mêmes pour obtenir des pâtons.
      On surgèle les pâtons à - 35°C, par exemple.
      Le nombre total de couches grasses est de 162.
      On cuit les pâtons comme à l'Exemple 1. On obtient des croissants appétissants de qualité remarquable. Le développement en volume au cours de la cuisson est de l'ordre de 5.
   b) 2ème méthode
      On prend 1000 grammes de pâte non levurée en forme de feuille.
      On prend 1000 grammes de pâte levurée en forme de feuille.
      On place la feuille de pâte non levurée sur la feuille de pâte levurée, puis on étale 800 grammes de margarine sur la feuille de pâte non levurée.
      On toure la structure stratifiée résultante comme décrit à l'Exemple 1 pour obtenir 54 couches de margarine.
      On roule la pâte jusqu'à une épaisseur de 3,5 mm environ.
      On découpe la pâte en morceaux en forme de triangle pesant environ 50 g chaque, qu'on enroule sur eux-mêmes pour obtenir des pâtons.
      On surgèle les pâtons à - 35°C, par exemple.
      Le nombre total de couches grasses est de 54.
      On cuit les pâtons comme à l'Exemple 1. On obtient des croissants appétissants de qualité remarquable. Le développement en volume au cours de la cuisson est de l'ordre de 5.

### Exemple 4

On répète le mode opératoire de l'exemple 3 si ce n'est qu'on omet d'ajouter les additifs glucono-delta-lactone, Tylose et lipase.

On obtient finalement, après cuisson des pâtons, des croissants, moins développés que ceux obtenus à l'exemple 1, mais d'une qualité très convenable, supérieure à celle des produits actuellement disponibles dans le commerce.

### Exemple 5 - Fabrication de pâtons de croissants crus surgelés à partir de pâte levurée seule

On abaisse 1000 grammes de la pâte levurée de l'Exemple 1 à la forme d'une feuille et on y étale une couche de 300 grammes de margarine. On toure 1 x 3 (c'est-à-dire un pliage en 3 plis), puis on roule à 7 mm d'épaisseur environ la pâte levurée feuilletée tourée résultante.

On toure le tout 2 x 3 (2 pliages successifs en 3 plis chacun).

On toure encore 1 x 3, puis 1 x 2.

On roule la pâte jusqu'à une épaisseur de 3,5 mm environ.

On découpe la pâte en morceaux en forme de triangle pesant environ 50 g chaque, qu'on enroule sur eux-mêmes pour obtenir des pâtons.

On surgèle les pâtons à - 35°C, par exemple.

Le nombre total de couches de matière grasse est de 162.

On cuit les pâtons comme à l'Exemple 1. Les croissants obtenus sont d'une haute qualité, similaire à celle des croissants obtenus dans l'Exemple 3.

Il est à noter qu'il est possible de recycler les chutes de pâte tourée dans une proportion pouvant aller jusqu'à 10-15%, ce qui contribue à améliorer la compétitivité économique de l'invention.

L'invention s'adresse tant aux boulangers professionnels qu'aux consommateurs.

## Revendications

1. Pâtons crus surgelés pouvant être directement cuits en croissants et autres produits de boulangerie similaires, sans décongélation ni fermentation intermédiaire, comprenant une pluralité de couches de matière grasse et une pluralité de couches de pâte levurée, caractérisés en ce qu'ils comportent un nombre total de couches de matière grasse supérieur à 50.

2. Pâtons selon la revendication 1, caractérisés en ce qu'ils comprennent, en outre, une pluralité de couches de pâte dépourvue de levure.

3. Pâtons selon la revendication 1 ou 2, caractérisés en ce qu'ils contiennent, en outre, au moins l'un des trois additifs suivants :
- un agent acidifiant à action progressive,
- un agent épaississant et/ou gélifiant, rétenteur d'eau,
- un enzyme lipolytique.

4. Pâtons selon la revendication 3, caractérisés en ce qu'ils contiennent à la fois les trois additifs précités.

5. Pâtons selon la revendication 3 ou 4, caractérisés en ce que l'agent acidifiant à action progressive est la glucono-delta-lactone.

6. Pâtons selon la revendication 3 ou 4, caractérisés en ce que l'agent épaississant et/ou gélifiant est choisi parmi la carboxyméthylcellulose et ses dérives, un polysaccharide, et un alginate.

7. Pâtons selon la revendication 6, caractérisés en ce que le polysaccharide est de la gomme guar ou du xanthane.

8. Pâtons selon la revendication 3 ou 4, caractérisés en ce que l'enzyme lipolytique est une lipase.

9. Pâtons selon la revendication 5, caractérisés en ce que la glucono-delta-lactone est incorporée à raison de 2 à 10 parties en poids par 1000 parties en poids de farine.

10. Pâtons selon la revendication 6, caractérisés en ce que ledit agent épaississant et/ou gélifiant est incorporé à raison de 2 à 10 parties en poids par 1000 parties en poids de farine.

11. Pâtons selon la revendication 8, caractérisés en ce que ladite enzyme est incorporée à raison de 12 à 120 unités LCA par kilogramme de farine (l'unité LCA est une unité enzymatique définie par la Société ROHM dans le document 50-1-16-E et basée sur une mesure de l'activité de lipase sur un substrat tributyrate de glycérine.).

12. Procédé de fabrication de pâtons crus surgelés pouvant être directement cuits en croissants ou autres produits de boulangerie similaires, sans décongélation ni fermentation intermédiaire, caractérisé en ce qu'il comprend les étapes suivantes :
a) préparer une pâte levurée ;
b) abaisser la pâte obtenue sous forme de feuille et lui appliquer une couche de matière grasse ;
c) tourer le tout de façon que le nombre total de couches de la matière grasse soit supérieur à 50 ;
d) rouler la pâte tourée jusqu'à l'épaisseur désirée, et former des pâtons à partir de ladite pâte ; et
e) surgeler les pâtons.

13. Procédé de fabrication de pâtons crus surgelés pouvant être directement cuits en croissants ou autres produits de boulangerie similaires, sans décongélation ni fermentation intermédiaire, caractérisé en ce qu'il comprend les étapes suivantes :
i) préparer une pâte exempte de levure ;
ii) préparer une pâte levurée ;
iii) abaisser les pâtes obtenues sous forme de feuilles;
iv) préparer une structure stratifiée comprenant au moins une séquence constituée dans l'ordre, d'une couche de pâte levurée, d'une couche de pâte non levurée et d'une couche de matière grasse, et tourer cette structure de façon que le nombre total de couches de matière grasse soit supérieur à 50;
v) rouler la pâte tourée résultante jusqu'à l'épaisseur désirée, et former des pâtons à partir de ladite pâte ; et
vi) surgeler les pâtons.

14. Procédé selon la revendication 12 ou 13, caractérisé en ce que le nombre total de couches de matière grasse est compris entre 80 et 500.

15. Procédé selon la revendication 14, caractérisé en ce que le nombre total de couches de matière grasse est compris entre 80 et 240.

16. Procédé selon l'une quelconque des revendications 12 à 15, caractérisé en ce qu'il comprend, en outre, l'incorporation, dans au moins l'une des pâtes, d'au moins l'un des trois additifs suivants :
- un agent acidifiant à action progressive,
- un agent épaississant et/ou gélifiant, rétenteur d'eau,
- un enzyme lipolytique.

17. Procédé selon la revendication 16, caractérisé en ce qu'on incorpore les trois additifs précités.

18. Procédé selon la revendication 16 ou 17, caractérisé en ce qu'on incorpore de la glucono-delta-lactone comme agent acidifiant à action progressive.

19. Procédé selon la revendication 16 ou 17, caractérisé en ce qu'on incorpore une lipase comme enzyme lipolytique.

20. Procédé selon la revendication 16 ou 17, caractérisé en ce qu'on incorpore un agent épaississant et/ou gélifiant choisi parmi la carboxyméthylcellulose et ses dérivés, un polysaccharide, et un alginate.

21. Procédé selon la revendication 20, caractérisé en ce que le polysaccharide est la gomme guar ou le xanthane.

22. Croissants et autres produits de boulangerie obtenus par cuisson directe de pâtons crus surgelés tels que définis à l'une quelconque des revendications 1 à 11.

## Claims

1. Deep-frozen raw dough pieces which can be directly baked into croissants and other similar bakery products without thawing or intermediate fermenting, comprising a plurality of fat layers and a plurality of layers of yeast dough, characterized in that they contain a total number of fat layers greater than 50.

2. Dough pieces as claimed in claim 1, characterized in that they comprise, in addition, a plurality of dough layers free of yeast.

3. Dough pieces as claimed in claim 1 or 2, characterized in that they contain, in addition, at least one of the following three additives:
- an acidifying agent which acts progressively,
- a thickening and/or gelling agent which retains water, and
- a lipolytic enzyme.

4. Dough pieces as claimed in claim 3, characterized in that they contain all three of the abovementioned additives.

5. Dough pieces as claimed in claim 3 or 4, characterized in that the progressively-acting acidifying agent is glucono-delta-lactone.

6. Dough pieces as claimed in claim 3 or 4, characterized in that the thickening and/or gelling agent is chosen from carboxymethylcellulose and its derivatives, a polysaccharide, and an alginate.

7. Dough pieces as claimed in claim 6, characterized in that the polysaccharide is guar gum or xanthan.

8. Dough pieces as claimed in claim 3 or 4, characterized in that the lipolytic enzyme is a lipase.

9. Dough pieces as claimed in claim 5, characterized in that glucono-delta-lactone is incorporated in a proportion of 2 to 10 parts by weight per 1000 parts by weight of flour.

10. Dough pieces as claimed in claim 6, characterized in that said thickening and/or gelling agent is incorporated in a proportion of 2 to 10 parts by weight per 1000 parts by weight of flour.

11. Dough pieces as claimed in claim 8, characterized in that said enzyme is incorporated in a proportion of 12 to 120 LCA units per kg of flour (the LCA unit is an enzymatic unit defined by the Rohm company in the document 50-1-16-E and is based on a measurement of the lipase activity on a glycerol tributyrate substrate).

12. Process for the manufacture of deep-frozen raw dough pieces which can be directly baked into croissants or other similar bakery products, without thawing or intermediate fermenting, characterized in that it comprises the following steps:
a) preparing a yeast dough;
b) rolling out the dough obtained into sheet form and applying a layer of fat to it;
c) folding the whole so that the total number of fat layers is greater than 50;
d) rolling out the folded dough until the desired thickness is obtained, and producing the dough pieces from the said dough; and
e) deep-freezing the dough pieces.

13. Process for the manufacture of deep-frozen raw dough pieces which can be directly baked into croissants or other similar bakery products, without thawing or intermediate fermenting, characterized in that it comprises the following steps:
i) preparing a dough free of yeast;
ii) preparing a yeast dough;
iii) rolling out the dough obtained into sheet form;
iv) preparing a laminated structure comprising at least one sequence consisting, in order, of a layer of yeast dough, a layer of yeast-free dough and a layer of fat, and folding this structure so that the total number of fat layers is greater than 50;
v) rolling out the resulting folded dough until the desired thickness is obtained, and producing dough pieces from said dough; and
vi) deep-freezing the dough pieces.

14. Process as claimed in claim 12 or 13, characterized in that the total number of fat layers is between 80 and 500.

15. Process as claimed in claim 14, characterized in that the total number of fat layers is between 80 and 240.

16. Process as claimed in any one of claims 12 to 15, characterized in that it comprises, in addition, the incorporation into at least one of the doughs prepared in a) and b), of at least one of the following three additives:
- an acidifying agent which acts progressively,
- a thickening and/or gelling agent which retains water, and
- a lipolytic enzyme.

17. Process as claimed in claim 16, characterized in that the three abovementioned additives are incorporated.

18. Process as claimed in claim 16 or 17, characterized in that glucono-delta-lactone is incorporated as acidifying agent which acts progressively.

19. Process as claimed in claim 16 or 17, characterized in that a lipase is incorporated as lipolytic enzyme.

20. Process as claimed in claim 16 or 17, characterized in that a thickening and/or gelling agent is incorporated which is chosen from carboxymethylcellulose and its derivatives, a polysaccharide and an alginate.

21. Process as claimed in claim 20, characterized in that the polysaccharide is guar gum or xanthan.

22. Croissants and other bakery products obtained by directly baking deep-frozen raw dough pieces as defined in any one of claims 1 to 11.

## Patentansprüche

1. Tiefgefrorene, rohe Teigstücke, die unmittelbar, ohne zwischenzeitliches Auftauen und Fermentieren, zu Croissants und anderen ähnlichen Backwaren gebacken werden können, mit mehreren Schichten aus Fett und mehreren Schichten aus Hefeteig, dadurch gekennzeichnet, daß sie eine Gesamtzahl von Schichten aus Fett von mehr als 50 aufweisen.

2. Teigstücke nach Anspruch 1, dadurch gekennzeichnet, daß sie ferner mehrere Schichten aus hefefreiem Teig aufweisen.

3. Teigstücke nach Anspruch 1 oder 2, dadurch gekennzeichnet, daß sie mindestens einen der drei folgenden Zusätze enthalten:
- ein progressiv wirkendes Säuerungsmittel,
- ein wasserbindendes Verdickungs- und/oder Geliermittel,
- ein lipolytisches Enzym.

4. Teigstücke nach Anspruch 3, dadurch gekennzeichnet, daß sie gleichzeitig die drei vorgenannten Zusätze enthalten.

5. Teigstücke nach Anspruch 3 oder 4, dadurch gekennzeichnet, daß das progressiv wirkende Säuerungsmittel Glukondeltalakton ist.

6. Teigstücke nach Anspruch 3 oder 4, dadurch gekennzeichnet, daß das Verdickungs- und/oder Geliermittel ausgewählt ist aus Karboxymethylzellulose und deren Derivaten, einem Polysaccharid und einem Alginat.

7. Teigstücke nach Anspruch 6, dadurch gekennzeichnet, daß das Polysaccharid Guarmehl oder Xanthan ist.

8. Teigstücke nach Anspruch 3 oder 4, dadurch gekennzeichnet, daß das lipolytische Enzym eine Lipase ist.

9. Teigstücke nach Anspruch 5, dadurch gekennzeichnet, daß das Glukondeltalakton im Verhältnis von 2 bis 10 Gewichtsteilen pro 1000 Gewichtsteilen Mehl enthalten ist.

10. Teigstücke nach Anspruch 6, dadurch gekennzeichnet, daß das Verdickungs- und/oder Geliermittel im Verhältnis von 2 bis 10 Gewichtsteilen pro 1000 Gewichtsteilen Mehl enthalten ist.

11. Teigstücke nach Anspruch 8, dadurch gekennzeichnet, daß das Enzym im Verhältnis von 12 bis 120 LCA-Einheiten pro Kilogramm Mehl enthalten ist (die Einheit LCA ist eine enzymatische Einheit, die von dem Unternehmen ROHM in dem Dokument 50-1-16-E definiert ist und auf einer Messung der Einwirkung von Lipase auf ein Glyzerin-Tributyratsubstrat basiert).

12. Verfahren zum Herstellen von tiefgefrorenen, rohen Teigstücken, die unmittelbar, ohne zwischenzeitliches Auftauen und Fermentieren, zu Croissants oder anderen ähnlichen Backwaren gebacken werden können, dadurch gekennzeichnet, daß es die folgenden Schritte aufweist:
a) Bereiten eines Hefeteigs;
b) den erhaltenen Teig blattförmig machen und eine Schicht aus Fett auf ihm aufbringen;
c) das Gesamte so falten, daß die Gesamtzahl der Schichten aus Fett größer als 50 ist;
d) den gefalteten Teig auf die gewünschte Dicke ausrollen und aus diesem Teig Teigstücke bilden; und
e) die Teigstücke tieffrieren.

13. Verfahren zum Herstellen von tiefgefrorenen, rohen Teigstücken, die direkt, ohne zwischenzeitliches Auftauen udn Fermentieren, zu Croissants oder anderen ähnlichen Backwaren gebacken werden können, dadurch gekennzeichnet, daß es die folgenden Schritte aufweist:
i) Bereiten eines hefefreien Teiges;
ii) Bereiten eines Hefeteiges;
iii) die erhaltenen Teige blattförmig machen;
iv) Bereiten einer Schichtstruktur mit mindestens einer Sequenz, die - in dieser Reihenfolge - gebildet wird von einer Schicht aus Hefeteig, einer Schicht aus hefefreiem Teig und einer Schicht aus Fett, und Falten dieser Struktur derart, daß die Gesamtzahl der Schichten aus Fett größer als 50 ist;
v) Ausrollen des resultierenden, gefalteten Teiges auf die gewünschte Dicke und Bilden von Teigstücken aus diesem Teig;
vi) Tieffrieren der Teigstücke.

14. Verfahren nach Anspruch 12 oder 13, dadurch gekennzeichnet, daß die Gesamtzahl der Schichten aus Fett zwischen 80 und 500 liegt.

15. Verfahren nach Anspruch 14, dadurch gekennzeichnet, daß die Gesamtzahl der Schichten aus Fett zwischen 80 und 240 liegt.

16. Verfahren nach einem der Ansprüche 12 bis 15, dadurch gekennzeichnet, daß ferner mindestens einem der Teige mindestens einer der folgenden drei Zusätze beigegeben wird:
- ein progressiv wirkendes Säuerungsmittel;
- ein wasserbindendes Verdickungs- und /oder Geliermittel,
- ein lipolytisches Enzym.

17. Verfahren nach Anspruch 16, dadurch gekennzeichnet, daß die drei vorgenannten Zusätze beigegeben werden.

18. Verfahren nach Anspruch 16 oder 17, dadurch gekennzeichnet, daß als progressiv wirkendes Säuerungsmittel Glukondeltalakton beigegeben wird.

19. Verfahren nach Anspruch 16 oder 17, dadurch gekennzeichnet, daß als lipolytisches Enzym Lipase zugegeben wird.

20. Verfahren nach Anspruch 16 oder 17, dadurch gekennzeichnet, daß ein Verdickungs- und/oder Geliermittel beigegeben wird, das aus Karboxymethylzellulose und ihren Derivaten, einem Polysaccharid und einem Alginat ausgewählt wird.

21. Verfahren nach Anspruch 20, dadurch gekennzeichnet, daß das Polysaccharid Guarmehl oder Xanthan ist.

22. Croissants und andere Backwaren, die durch direktes Backen der tiefgefrorenen, rohen Teigstücke nach einem der Ansprüche 1 bis 11 erhalten werden.
